# EUROPÄISCHE PATENTSCHRIFT

(11) **EP 0 587 998 B1**
(45) Veröffentlichungstag und Bekanntmachung des Hinweises auf die Patenterteilung: **01.04.1998**
(21) Anmeldenummer: 93109237.3
(22) Anmeldetag: 09.06.1993
(51) Int. Cl.: C03C 17/02, C03C 17/34, B44D 3/16

(54) **Verfahren zur Ausbildung eines entfernbaren Oberflächenbereiches auf einem Glaskeramik-Substrat**
Method for forming a removable surface region on a glass ceramic substrate
Méthode pour la formation d'une zone superficielle amovible sur un substrat en vitrocéramique

(30) Priorität: 14.09.1992 DE 4230732
(43) Veröffentlichungstag der Anmeldung: 23.03.1994
(73) Patentinhaber: Schott Glaswerke, 55122 Mainz (DE); CARL-ZEISS-STIFTUNG trading as SCHOTT GLASWERKE, 55122 Mainz (DE)
(72) Erfinder: Schaupert, Kurt, Dr., D-6238 Hofheim-Wallau (DE)

(56) Entgegenhaltungen:
- EP-A- 0 148 427
- GB-A- 2 002 743
- US-A- 4 440 810
- PATENT ABSTRACTS OF JAPAN vol. 016, no. 254 (E-1213) 9. Juni 1992 & JP-A-04 054 811 (HAIBETSUKU:KK) 21. Februar 1992

## Beschreibung

Die Erfindung betrifft ein Verfahren zur Ausbildung eines entfernbaren Oberflächenbereiches bestimmter Tiefe auf einem Substrat und zu seiner Entfernung von dem Substrat, mit allen auf der Oberfläche des Substrates aufsitzenden Beschichtungen, wie Dekoren, Glasuren, Versiegelungen, Schutz- und Farbschichten, bei dem eine im Verhältnis zum Substrat dünne Schicht eines Materials mit einem im Vergleich zum Substrat stark abweichenden thermischen Ausdehnungskoeffizienten bei einer Temperatur mit dem Substrat verbunden und anschließend auf eine andere Temperatur abgekühlt wird.

Sie betrifft auch ein Substrat, von dem ein Oberflächenbereich bestimmter Tiefe entfernt wurde, hergestellt nach dem vorgeschlagenen Verfahren.

Oft ist es technisch notwendig oder wünschenswert, Substrate oberflächlich und/oder von aufsitzenden Beschichtungen zu reinigen.

Besonders wenn das Substrat einen wertvollen, wiederverwendbaren Rohstoff darstellt, dessen Eigenschaften durch die aufsitzenden Beschichtungen im Falle der Wiederverwendung des Substrates negativ verändert werden, ist es eine zum Teil sehr aufwendige und teure Notwendigkeit, die Beschichtung vom Substrat zu trennen:
- Wenn die hergestellte Beschichtung den technischen Erfordernissen durch Produktionsfehler, wie z. B. teilweises Ablösen oder Verlaufen von Dekoren nicht entspricht,
- oder der ästhetische Eindruck, z.B. durch Farbänderungen vom vorgegebenen Standard, abweicht.

In zunehmendem Maße wird jedoch auch der Fall immer bedeutsamer, daß durch Verordnungen und Auflagen des Gesetzgebers der jeweilige Hersteller gezwungen wird, seine Produkte nach der Einsatzzeit beim Kunden, gebraucht wieder zurückzunehmen.

Um hier nicht in großem Umfang zusätzliche Kosten für Endlagerung, Lagerplatz, Lagerverwaltung und Entsorgung aufwenden zu müssen, ist es notwendig, diese gebrauchten Produkte wieder als "neue" Rohstoffe in den jeweiligen Herstellungsprozeß zurückzuführen.
So werden einerseits die Kosten für die Lagerung der zurückgenommenen, gebrauchten Produkte erheblich reduziert und andererseits zum Teil teure Rohstoffe durch Recycling dieser Produkte eingespart.

Doch sind oftmals dem gebrauchten zurückzunehmenden Produkt aufsitzende Beschichtungen oder Verschmutzungen zu entfernen, die ein an sich technisch mögliches und vorteilhaftes Recycling des Grundmaterials verhindern oder entscheidend einschränken.

Fest sitzende Beschichtungen und/oder Verschmutzungen sind meist aber nur sehr kostenintensiv und aufwendig vom Träger zu entfernen.

Stand der Technik ist z.B.,
- mechanisches Abschleifen oder Abschneiden der Beschichtungen, was sehr zeitintensiv ist, zum Teil einen hohen Aufwand an teuren Maschinen, Schlief- und Trennmitteln erfordert und darüber hinaus Entsorgungsprobleme der entstehenden Feinstäube, der Kühlmittel und bei Naßverfahren der Abtrennung und Einengung der staubhaltigen Suspensionen, nach sich zieht.
- Abbrand und Oxidation der Beschichtungen und/oder Verschmutzungen unter zum Teil großen Emmissionsmengen von möglicherweise toxischen Gasen, mit einer Vielzahl von kaum erfaßbaren organischen und anorganischen Zwischenverbindungen, in Abhängigkeit von der Temperatur, der Brennerführung und den Atmosphären beim Brand.
   Darüber hinaus sind die bei solchen Verfahren einzubringenden Energiekosten sehr hoch, die Ofenanlagen und die Rauch- und Abgasreinigung, die gegenüber auch großen Mengen von Flußmitteln wie Pb²⁺, K⁺, Li⁺, Na⁺, usw., und korrosiven Gasen, die F⁻, Cl⁻ enthalten, beständig sein müssen, sehr teuer.
- Ablaugung oder Ätzung mit Säuren und/oder Basen. Auch diese Verfahren sind technisch aufwendig und teuer; darüber hinaus sind die entstehenden Reaktionsprodukte nur sehr schwer zu entsorgen.

In der GB-A-2 002 743 ist ein Verfahren beschrieben, um eine auf der Oberfläche eines Substrats (warmgewalzter Draht oder Blech) aufsitzende Schicht (Oxide, Zunder) abzulösen. Das Verfahren sieht vor, auf das verzunderte Substrat bei hoher Temperatur eine dünne Schicht eines Glases aufzubringen und diese sodann rasch abzukühlen, wobei die Beschichtung aufgrund ihres stark abweichenden thermischen Ausdehnungskoeffizienten mitsamt der darunterbefindlichen Oxidschicht abplatzt.

Aufgabe der Erfindung ist es daher, kostengünstig und umweltschonend auf der Oberfläche von Substraten fest aufsitzende Beschichtungen und/oder Verschmutzungen zu entfernen, die eine Recycling des Substrats nicht, oder nur in sehr geringem Umfang, möglich machen würden. Des weiteren ist es Aufgabe der Erfindung, die abgelösten Beschichtungen umweltneutral und chemisch inert aufzubereiten und einzubinden, so daß deren Entsorgung keinerlei Probleme mehr mit sich bringt.

Die Aufgabe der Erfindung wird dadurch gelöst, daß als Substrat eine Glaskeramik verwendet wird und als Material, das mit dem Substrat bei einer Temperatur verbunden wird, ein übliches Glas eingesetzt wird.

Dieses Verfahren hat sich bei dekorierten Glaskeramikplatten als außerordentlich effizient erwiesen.

Glaskeramikplatten werden voraussichtlich ab 1994 vom Hersteller zurückgenommen werden, um einerseits den Anforderungen des Gesetzgebers Genüge zu leisten, andererseits um einen an sich wertvollen Rohstoff wieder in den Produktionsprozeß zurückzuführen.

Problematisch ist auch hierbei das Dekor.
Ohne Dekor können bis zu 60 Gew.-% Glaskeramik, z.B. als Scherben, auch aus alten gebrauchten Platten, wieder problemlos mit aufgeschmolzen werden.
Zu maximal 10 % kann dekorierte Glaskeramik zurückgeführt werden; und selbst dieser geringe Anteil kann schon Probleme mit sich bringen.

Das Dekor enthält Fremdstoffe, die im Glasgemenge nicht oder nur in sehr geringen Mengen vorhanden sein dürfen.
Die Entfernung der Dekore von der Oberfläche der Glaskeramik ist also zwingend notwendig, um die Zusammensetzung des Glasgemenges nicht durch Zufügung von dekorierten Scherben und Bruch aus fehlerhafter Produktion oder aus Recycling-Beständen zu verändern.

Bei Zugabe z.B. bleihaltiger Dekore würde ohne vorherige Entfernung des Dekors das Blei in unzulässigem Maß angereichert.
Ähnliches gilt für viele andere Oxide, wie z.B. die von Eisen, die die Zusammensetzung des Grundglasgemenges so ändern würden, daß z.B. ein reproduzierbarer Keramisierungsprozeß mit gleichen Eigenschaften des Endproduktes nicht mehr zu erreichen wäre.

Auch die Pigmente aus dem Dekor verändern die Transmission der Glaskeramik und führen zu einem Glasgemenge, das bei der Keramisierung und in den Gebrauchseigenschaften keine gleichmäßigen Produkte mit garantiefähigen Merkmalen ergibt.

Die zwingend notwendige Entfernung des Dekors ist nach dem Verfahren der Erfindung problemlos möglich geworden und vermeidet die oben genannten Nachteile der bisher bekannten Methoden Oberflächenschichten zu beseitigen.

Als Material, das mit dem Substrat z.B. einer Glaskeramik, bei einer Temperatur verbunden wird, wird ein übliches Kalknatron-Glas eingesetzt.

Das Verfahren nutzt dabei die Unterschiede der thermischen Ausdehnungskoeffizienten.
Glaskeramik hat beispielsweise eine Wärmedehnung, die um den Faktor 20-60 unter der anderer Glassorten liegt.

Zur Durchführung des erfindungsgemäßen Verfahrens sind Unterschiede in der Wärmedehnung mindestens um den Faktor 10 notwendig.

Als Glas kann daher praktisch jede übliche Glassorte eingesetzt werden. Bevorzugt werden jedoch Floatglas, niedrigschmelzende Spezialgläser, aber auch Altgläser, insbesondere schon bleihaltige, zur Anwendung gebracht.

Floatglas ist vorteilhaft, weil es preisgünstig in definierten Dicken und Zuschnitten erhältlich ist; niedrigschmelzende Spezialgläser sind zwar teurer, reduzieren aber die Temperaturen bei der das Glas sich mit dem Substrat verbinden erheblich und sparen dadurch zum Teil Energiekosten.
Besonders preisgünstig ist der Einsatz von Altgläsern, die ebenfalls nicht recyclebar und daher zu entsorgen sind, weil sie z.B. Blei oder ähnliche Verbindungen enthalten und die bei diesem Verfahren nochmals nutzbringend eingesetzt werden können.
Nachteilig ist bei Altgläsern, daß sie oft nur gebrochen, als Scherben vorliegen.

Nach der vorliegenden Erfindung hat es sich als günstig erwiesen, das Glas als dünne Platte auf das Substrat aufzulegen.

Vorteile sind dabei die definierten Dicken von Glasplatten und die Möglichkeit große Flächen schnell und einfach zu belegen.

Die Größe der Glasplatten hat dabei jedoch Grenzen, da dafür gesorgt werden muß, daß bei erhöhter Temperatur entstehende gasförmige Reaktionsprodukte, z. B. durch eingeschlossene Luftfeuchtigkeit zwischen dem gasdichten Substrat und der gasdichten Glasplatte, ohne zu lange Wege schnell entweichen können.
Können die Gase nicht vollständig entweichen, da die Ränder der überliegenden Glasplatte sich bereits mit dem Substrat verbunden haben, kann es zu kissenförmigen Aufwölbungen im Mittelbereich der Glasplatte kommen, wobei dann keine Verbindung mehr zwischen Substrat und Glasplatte zustande kommt.

Vorteilhafterweise werden daher auch große Substratflächen mit mehreren Einzelsegmenten des Glases abgedeckt.
Auch die zur Ablösung notwendigen Kräfte und deren Einleitung in das Substrat sind bei kleineren Segmenten des Glases günstiger.
So ist z. B. eine Substratfläche von 300 x 300 mm nicht mit einer Glasplatte von 300 x 300 mm abzudecken, sondern vorteilhafterweise mit 3 Glasstreifen von je 300 x 100 mm.

Diese Problematik besteht nicht, wenn, wie nach der Erfindung vorgeschlagen, das Glas als Glaspulver und/oder als Zubereitung eines Glaspulvers auf das Substrat aufgebracht wird.

Der Vorteil dieses Vorgehens liegt darin, daß möglicherweise entstehende gasförmige Reaktionsprodukte in der Aufheizphase durch die auf dem Substrat aufliegende Schicht aus Glaspulver entweichen können und nach Schmelzen des Pulvers eine geschlossene Schicht in Kontakt mit dem Substrat stehen kann. Weiterhin können auch unebene Substrate so bearbeitet werden.

Das Glaspulver wird bevorzugt aus den oben genannten Glassorten durch Brechen und Mahlen auf Korngrößen von 0,1 bis 5 mm, insbesondere von 0,5 bis 2 mm hergestellt und kann trocken, oder mit Flüssigkeit zur Entstaubung, in gleichmäßiger Schichtdicke auf das Substrat aufgestreut werden. gleichmäßig und in einer Schichtdicke erfolgt, daß das Pulver nach der Verbindung mit dem Substrat bei erhöhter Temperatur eine geschlossene Schicht ausbildet.

In bevorzugter Ausführungsform wird daher eine Zubereitung eines Glaspulvers aufgebracht.
Als Zubereitung sind dabei Suspensionen, auch sogenannte Schlicker oder Pasten zu verstehen, die auf Basis des jeweiligen Glaspulvers oder auf geeigneten Abmischungen verschiedener Glaspulversorten hergestellt werden.

Solche Zubereitungen sind relativ einfach, meistens auf Basis von Wasser, unter Zuhilfenahme von Schlickerhilfsmitteln, sogenannten Verflüssigern, d.h. oberflächenaktiven Substanzen und von sogenannten Stellmitteln, d.h. meist organischen üblichen Verdickungsmitteln, wie z.B. Stärken, Tylosen oder ähnlichen, die auch als Bindungsvermittler zwischen Substrat und überliegender Schicht wirken können, herzustellen.

Es ist dabei allerdings, besonders bei der Auswahl der Verdickungsmittel darauf zu achten, daß diese Zubereitungen zu jedem Zeitpunkt gasdurchlässig bleiben und alle gasförmigen Reaktionsprodukte, besonders das Wasser aus der Zubereitung, entweichen kann.

Vorteile dieses Verfahrens sind insbesondere:
- Staubfreies, gleichmäßiges, flächiges Aufbringen der Materialschicht in definierter Dicke,
- gute Verbindung mit dem Substrat, auch schon vor Temperatureinwirkung,
- die Möglichkeit homogene Abmischungen verschiedener Glassorten herzustellen,
- auch große Substratflächen sehr gleichmäßig, randscharf und schnell zu überdecken.

Überraschenderweise hat sich gezeigt, daß beim Einsatz von Schlickerhilfsmitten bzw. Verflüssigern, die Na⁺ oder K⁺ als Ladungsträger enthalten, sogar noch die Temperatur, bei der sich das Substrat mit der Schicht aus der Zubereitung des Glaspulvers verbindet, zum Teil erheblich erniedrigt wird.
Das spart Energiekosten ein.

Das Aufbringen einer gleichmäßigen Schicht definierter Dicke des auf dem Substrat aufliegenden Glas-Materials ist nach dem erfindungsgemäßen Verfahren zur Ausbildung eines leicht und flächig entfernbaren Oberflächenbereiches bestimmter, ebenfalls gleichmäßiger Tiefe Voraussetzung.

Dabei werden Schichtdickenverhältnisse von Substrat zu dem Material, das mit dem Substrat bei einer Temperatur verbunden wird, von 4:1 bis 8:1 vorteilhafterweise eingehalten.

Wird die Glasschicht, die sich mit dem Substrat Glaskeramik verbinden und einen entfernbaren Oberflächenbereich ausbilden soll zu dünn gewählt, bildet sich der Oberflächenbereich nicht ausreichend aus, und bleibt dann mit dem Substrat größtenteils fest verbunden.
Offensichtlich reichen bei diesen dünnen Glasschichten selbst dann, wenn sie gut auf dem Substrat haften, die "Zugfestigkeit" und die zur Ablösung eines Oberflächenbereichs notwendige "Kraft" bei der Kontraktion des Glases in der Abkühlphase nicht aus, um eine Oberflächenschicht unter Ausbildung von Muschelbruch abzureißen.

Zu dicke Glasschichten sind unwirtschaftlich, da deren Verbindung mit dem Substrat mehr Wärmeenergie erfordert und das Volumen des anfallenden und letztendlich zu entsorgenden Materials nur unnötig vergrößert wird.

In bevorzugter Ausführungsform des Verfahrens werden Substrate mit einem thermischen Ausdehnungskoeffizienten α von 0 ± 1,5 x 10⁻⁷ x K⁻¹, ein Wert, der für Glaskeramik zutrifft und Materialien mit einem α von 30 - 90 x 10⁻⁷ K⁻¹, wie er für Gläser üblich ist, eingesetzt.

Das erfindungsgemäße Verfahren nutzt dabei die sehr geringe Wärmedehnung von Glaskeramik im Vergleich zu Glas aus.
Schmilzt man Glas auf die Glaskeramik als Substrat auf und kühlt anschließend diesen Verbund ab, reißt durch Kontraktion die aufgebrachte Glasschicht zusammen mit einer dünnen Schicht Glaskeramik, mit allen auf der Glaskeramik aufgebrachten Beschichtungen, ab.

Nach dem Verfahren betragen die Temperaturen, bei denen das Material mit dem Substrat verbunden wird, d. h. bei dem das Glas auf die Glaskeramik aufschmilzt zwischen 650 °C und 800 °C, insbesondere zwischen 750 °C und 775°C.

Die Temperaturen sind in erster Linie von der Glassorte abhängig.
Niedrig schmelzende Gläser schmelzen bereits bei 660 °C auf die Glaskeramik auf, Floatglas bei etwa 775°C.
Die genannten Temperaturen werden dabei etwa 10 - 20 Minuten, vorteilhafterweise um die 15 Minuten aufrecht erhalten.

Anschließend wird der Verbund abgekühlt, und zwar vorteilhafterweise auf eine Temperatur, die zwischen der Temperatur, bei denen Substrat und Material verbunden werden, minus 400°C und Raumtemperatur liegt.
Also für Floatglas z. B. zwischen 375°C und Raumtemperatur.

Dabei werden leicht entfernbare Oberflächenbereiche bis zu einer Tiefe von 0,1 - 0,8 mm, insbesondere von 0,2 - 0,4 mm ausgebildet, die zum Teil als kleinere geschlossene Schichtflächen, zum Teil aber auch als lockerer Grus abreißen und entfernt werden und eine blanke neue Oberfläche auf dem Substrat schaffen.
Bei üblichen Substratdicken von 4-6 mm wird daher 90 % bis über 95 % des Substrates wiedergewonnen.

Die Erfindung bezieht sich auch auf Substrate, von denen Oberflächenbereiche bestimmter Tiefe entfernt wurden und die nach dem oben genannten Verfahren hergestellt werden.

An folgenden Ausführungsbeispielen soll die vorliegende Erfindung weiter veranschaulicht werden.

### Ausführungsbeispiel 1:

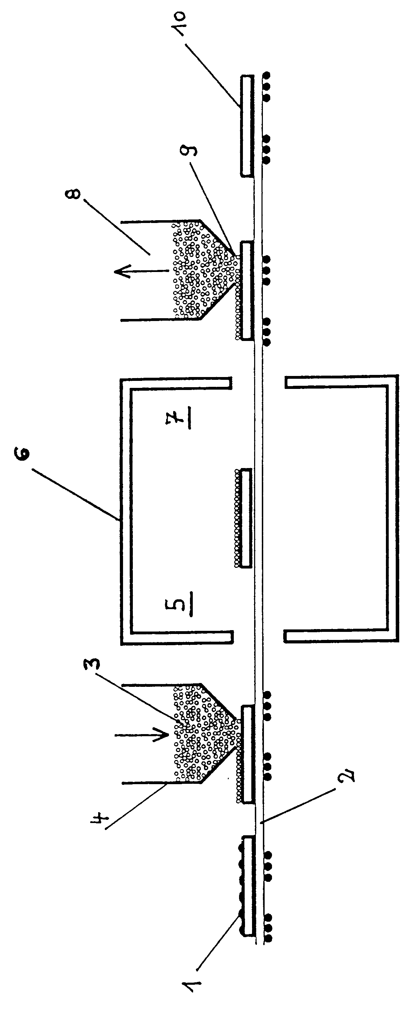

Die Figur zeigt einen Verfahrensablauf nach der Erfindung, bei dem eine dekorierte Glaskeramik-Kochfläche durch Aufbringen von Glas, anschließendem Tempern und Abkühlen des Verbundes, einen entfernbaren Oberflächenbereich bestimmter Tiefe zusammen mit den darauf aufsitzenden Dekor ausbildet, und dadurch eine neue Oberfläche auf dem Substrat entsteht.

Die Figur zeigt eine gebrauchte, dekorierte, 4 mm dicke Glaskeramik-Kochfläche (1), die eine Fehlproduktion ist, oder nach mehrjährigem Einsatz beim Kunden an den Hersteller zurückgegeben wird.
Die Platte wird maschinell, z. B. mittels Vakuumhebern auf einem Band (2) plaziert, positioniert und anschließend z. B. mit einer fließfähigen Zubereitung eines Glaspulvers (3), einem sogenannten Schlicker, in einer Schichtdicke von 0,7 mm vollflächig und gleichmäßig beschichtet.
Eine typische Zusammensetzung eines solchen Schlickers enthält z. B. auf 100 kg:
80 kg Glaspulver, der Körnung 55 % kleiner als 1 mm,
20 l demineralisiertes Wasser,
+ 0.01 kg Verflüssiger,
+ 0.1 kg Stellmittel.

Als Ausgangsglas für das Glaspulver wird typischerweise bleihaltiges Altglas eingesetzt, wie es für allgemeine elektrotechnische Anwendungen, z. B. auch für Trichter von Fernseh-Bildröhren verwendet wird. Solche Gläser enthalten etwa 20-30 Gew.-% PbO.

Der Schlicker wird in einer Trommelmühle oder einem sog. Attritor naß aufbereitet, bis die gewünschte Körnung erreicht ist.

Der Schlicker kann aber auch z. B. mit Bentonit und/oder Kaolin thixotrop eingestellt sein mit der Folge, daß er, sobald er aus dem durch Rührwerke in Bewegung gehaltenen Vorratsbehälter (4) ausfließt, sich auf der Platte in kurzer Zeit verfestigt.

Die so mit Glaspulver-Schlicker beschichtete Platte wird anschließend auf dem Rollenband (2) weiter in die Vorheizzone (5) des Ofens (6) befördert und getrocknet, bevor sie dann bei 775°C getempert wird.
Dabei schmilzt dann das Glas auf die Glaskeramik auf.
Nach etwa 15 Minuten wird die Glaskeramik-Substrat-Platte mit dem oberflächlich aufgeschmolzenen Glas-Material aus dem Ofen (6) in eine Abkühlzone (7) weiter verfahren, wobei dann das erstarrte Glas infolge seines vom Substrat abweichenden thermischen Ausdehnungskoeffizienten bei Temperaturen ab etwa 380°C beginnt zusammen mit einem dünnen Oberflächenbereich des Substrates abzureißen.

Hinter diesem Bereich wird der auf der Oberfläche nun locker aufliegende, abgemuschelte Grus aus Glasmaterial, Substratoberfläche und allen auf der Substratoberfläche aufgebrachten Dekoren entfernt (8).

Besonders einfach und staubfrei ist das durch Absaugen der Oberfläche mittels einer linienförmigen Saugdüse (9) möglich, die sich über die gesamte Breite der Platte erstreckt.

Die am Ende des Bandes vorliegende Platte (10) ist nun von allen Beschichtungen gereinigt und kann als Rohstoff problemlos wiederverwendet werden.

Natürlich kann anstelle einer Zubereitung eines Glaspulvers auch das Glaspulver trocken auf das Substrat aufgebracht werden.

### Ausführungsbeispiel 2:

Das Glas wird als Platte auf das Substrat aufgelegt.
Eine Glasplatte der Abmessungen 500 x 500 mm wird dann mit mehreren 1 mm dicken, 500 x 100 mm großen Streifen aus Floatglas belegt. Der Verfahrensablauf entspricht ansonsten vollkommen dem Ausführungsbeispiel 1.

Der abgemuschelte Grus aus Glaskeramik, Substratoberfläche und allen auf der Substratoberfläche aufgebrachten Dekoren kann dabei nach der Erfindung immer wieder aufgemahlen und aufbereitet werden, und entweder als Glaspulver trocken, oder in einer Zubereitung, anteilig oder ausschließlich, wiederverwendet werden.

## Patentansprüche

1. Verfahren zur Ausbildung eines entfernbaren Oberflächenbereiches bestimmter Tiefe auf einem Substrat und zu seiner Entfernung von dem Substrat, mit allen auf der Oberfläche des Substrates aufsitzenden Beschichtungen, bei dem eine im Verhältnis zum Substrat dünne Schicht eines Materials, mit einem im Vergleich zum Substrat stark abweichenden thermischen Ausdehnungskoeffizienten bei einer Temperatur mit dem Substrat verbunden und anschließend auf eine andere Temperatur abgekühlt wird,
**dadurch gekennzeichnet,**
daß als Substrat eine Glaskeramik verwendet wird und als Material, das mit dem Substrat bei einer Temperatur verbunden wird, ein übliches Glas eingesetzt wird.

2. Verfahren nach Anspruch 1,
**dadurch gekennzeichnet,**
daß als Glas ein Floatglas, ein niedrigschmelzendes Spezialglas oder auch, insbesondere bleihaltiges, Altglas eingesetzt wird.

3. Verfahren nach den Ansprüchen 1 und 2,
**dadurch gekennzeichnet,**
daß das Glas als Platte auf das Substrat aufgelegt wird.

4. Verfahren nach den Ansprüchen 1 und 2,
**dadurch gekennzeichnet,**
daß das Glas als Glaspulver und/oder als Zubereitung eines Glaspulvers auf das Substrat aufgebracht wird.

5. Verfahren nach den Ansprüchen 1 bis 4,
**dadurch gekennzeichnet,**
daß Schichtdickenverhältnisse von Substrat zu dem Material, das mit dem Substrat bei einer Temperatur verbunden wird, von 4 zu 1 bis 8 zu 1 eingehalten werden.

6. Verfahren nach den Ansprüchen 1 bis 5,
**dadurch gekennzeichnet,**
daß Substrate mit einem thermischen Ausdehnungskoeffizienten α von 0±1.5·10⁻⁷·K⁻¹ und Materialien mit einem α von 30-90·10⁻⁷·K⁻¹ eingesetzt werden.

7. Verfahren nach den Ansprüchen 1 bis 6,
**dadurch gekennzeichnet,**
daß die Temperaturen, bei denen das Material mit dem Substrat verbunden wird, zwischen 650 und 800°C, insbesondere zwischen 750 und 775°C, betragen.

8. Verfahren nach den Ansprüchen 1 bis 7,
**dadurch gekennzeichnet,**
daß die Temperatur, auf die das fest mit dem Substrat verbundene Material abgekühlt wird zwischen der Temperatur, bei denen Substrat und Material verbunden werden minus 400 K und Raumtemperatur liegt.

9. Verfahren nach den Ansprüchen 1 bis 8,
**dadurch gekennzeichnet,**
daß der entfernbare Oberflächenbereich bis zu einer Tiefe von 0.1-0.8 mm, insbesondere 0.2-0.4 mm, ausgebildet und entfernt wird.

10. Substrat, von dem ein Oberflächenbereich bestimmter Tiefe entfernt wurde, hergestellt nach dem Verfahren nach wenigstens einem der Ansprüche 1 bis 9.

## Claims

1. Process for forming a removable surface region of defined depth on a substrate and for removing it from the substrate with all the coatings present on the surface of the substrate, in which a layer, which is thin relative to the substrate, of a material having a coefficient of thermal expansion which deviates widely from that of the substrate is bonded to the substrate at one temperature and subsequently cooled to a different temperature, characterized in that a glass ceramic is used as the substrate and a conventional glass is employed as the material which is bonded to the substrate at one temperature.

2. Process according to Claim 1, characterized in that the glass employed is a float glass, a low-melting special glass or else, in particular, used lead-containing glass.

3. Process according to Claims 1 and 2, characterized in that the glass is placed as a plate upon the substrate.

4. Process according to Claims 1 and 2, characterized in that the glass is applied as a glass powder and/or as a preparation of a glass powder to the substrate.

5. Process according to Claims 1 to 4, characterized in that layer thickness ratios between the substrate and the material, which is bonded to the substrate at one temperature, from 4 to 1 up to 8 to 1 are maintained.

6. Process according to Claims 1 to 5, characterized in that substrates having a coefficient of thermal expansion α of 0±1.5×10⁻⁷×K⁻¹ and materials having an α of 30-90×10⁻⁷×K⁻¹ are employed.

7. Process according to Claims 1 to 6, characterized in that the temperatures, at which the material is bonded to the substrate are between 650 and 800°C, especially between 750 and 775°C.

8. Process according to Claims 1 to 7, characterized in that the temperature, to which the material firmly bonded to the substrate is cooled, is between the temperature, at which the substrate and the material are bonded, minus 400 K and room temperature.

9. Process according to Claims 1 to 8, characterized in that the removable surface region is formed and removed down to a depth of 0.1-0.8 mm, especially 0.2-0.4 mm.

10. Substrate, from which a surface region of defined depth has been removed, produced by the process according to at least one of Claims 1 to 9.

## Revendications

1. Méthode pour la formation d'une zone superficielle amovible d'une profondeur déterminée sur un substrat et pour son retrait du substrat, conjointement à tous les revêtements placés sur la surface du substrat, lors duquel une couche, mince par rapport au substrat, d'un matériau, ayant un coefficient de dilation thermique se différenciant fortement de celui du substrat, est liée au substrat à une température donnée et est ensuite refroidie à une autre température, caractérisée en ce que l'on utilise une vitrocéramique en tant que substrat, et que l'on utilise un verre usuel en tant que matériau, qui est lié au substrat à une température donnée.

2. Méthode selon la revendication 1, caractérisée en ce que l'on utilise en tant que verre un verre flotté, un verre spécial à bas point de fusion ou également un verre usagé, en particulier contenant du plomb.

3. Méthode selon les revendications 1 et 2, caractérisée en ce que l'on applique le verre en tant que plaque sur le substrat.

4. Méthode selon les revendications 1 et 2, caractérisée en ce que l'on applique le verre, en tant que poudre de verre et/ou en tant que préparation d'une poudre de verre, sur le substrat.

5. Méthode selon les revendications 1 à 4, caractérisée en ce que l'on maintient des rapports d'épaisseur de couche du substrat au matériau, qui est lié au substrat à une température donnée, à une valeur allant de 4 à 1 jusqu'à 8 à 1.

6. Méthode selon les revendications 1 à 5, caractérisée en ce que l'on utilise des substrats ayant un coefficient de dilation thermique α de 0 ± 1,5 10⁻⁷ K⁻¹ et des matériaux ayant une valeur α de 30-90 10⁻⁷ K⁻¹.

7. Méthode selon les revendications 1 à 6, caractérisée en ce que les températures, auxquelles le matériau est lié au substrat, sont comprises entre 650 et 800°C, en particulier entre 750 et 775°C.

8. Méthode selon les revendications 1 à 7, caractérisée en ce que la température, à laquelle le matériau solidement lié au substrat est refroidi, se situe entre la température à laquelle substrat et matériau sont liés moins 400°K, et la température ambiante.

9. Méthode selon les revendications 1 à 8, caractérisée en ce que l'on forme et que l'on retire la zone superficielle amovible jusqu'à une profondeur de 0,1 - 0,8 mm, en particulier de 0,2 - 0,4 mm.

10. Substrat, duquel une zone superficielle d'une profondeur déterminée a été retirée, fabriqué conformément à la méthode selon au moins l'une des revendications 1 à 9.
